# EUROPÄISCHE PATENTSCHRIFT

(11) **EP 1 864 778 B1**
(45) Veröffentlichungstag und Bekanntmachung des Hinweises auf die Patenterteilung: **30.07.2008**
(21) Anmeldenummer: 07010555.6
(22) Anmeldetag: 26.05.2007
(51) Int. Cl.: B29C 33/60, C08K 5/098

(54) **Trennmittel und seine Verwendung bei der Herstellung von Polyurethan-Formkörpern**
Release agent and its application in manufacturing polyurethane moulded bodies
Agent de démoulage et son utilisation pour la fabrication d'objets moulés en polyuréthane

(30) Priorität: 09.06.2006 DE 102006026870
(43) Veröffentlichungstag der Anmeldung: 12.12.2007
(73) Patentinhaber: Evonik Goldschmidt GmbH, 45127 Essen (DE)
(72) Erfinder: Henning, Torsten, 19057 Schwerin (DE)

(56) Entgegenhaltungen:
- DE-A1- 1 925 675
- US-A- 3 952 079
- US-A- 4 111 861

## Beschreibung

Die Erfindung betrifft Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähigen Werkstoffen wie Metallen, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen aufgebracht werden.

Solche Trennmittel bestehen aus Dispersionen oder Emulsionen von Wachsen, Seifen, Ölen und/oder Siliconen in Lösungsmitteln wie Kohlenwasserstoffen oder Wasser. Nach Aufbringen des Trennmittels auf die Form verdampft das Lösungsmittel und die nichtflüchtigen trennaktiven Substanzen bilden einen dünnen Trennfilm, damit der Polyurethan-Formkörper nach der Herstellung leicht aus der Form entnommen werden kann.

Neben der eigentlich benötigten Trennwirkung übernimmt das Trennmittel noch weitere Funktionen. So beeinflusst es auch sehr stark die Oberfläche des Polyurethan-Formkörpers, die feinporig bzw. glatt und gleichmäßig sein soll, unter anderem auch, um eine gute Beziehbarkeit der fertigen Formteile mit Stoffen oder Leder zu gewährleisten.

Im Zuge immer stärkerer Optimierung der Produktionsgeschwindigkeiten in der Automobilzuliefererindustrie ist gerade die oben beschriebene Eigenschaft der Beziehbarkeit des Polyurethan-Formkörpers zu einem wichtigen Qualitätsmerkmal geworden.

Eine Möglichkeit, die Oberflächenqualität der Polyurethanformschaumteile zu verbessern, ist der Einsatz von Stoffen, die die Polyol-Isocyanat-Reaktion katalysieren und dadurch beschleunigen. Die im Markt befindlichen Trennmittel für Polyurethanformteile enthalten daher üblicherweise sogenannte Zinnbeschleuniger, also Katalysatoren auf der Basis von organischen Zinnverbindungen. Neben der Verbesserung der Oberflächenqualität wirken diese Zinnbeschleuniger auch trennunterstützend, indem sie die Polyol-Isocyanat-Reaktion an der Grenzfläche zwischen Schaum und Trennfilm beschleunigen. Besonders geeignet sind Di-n-butylzinndicarboxylate, wie beispielsweise in EP 1 082 202 beschrieben. Hauptsächlich wird Dibutylzinndilaurat (DBTL) eingesetzt, wie z.B. in DE 35 41 513 oder EP 164 501 beschrieben.

Bekanntlich ist DBTL mit R 50/53 (umweltgefährlich, sehr giftig für Wasserorganismen) gekennzeichnet und birgt bei Lagerung und Transport von Trennmitteln, die DBTL enthalten, Risiken für die Umwelt in sich.

Daher fordern bereits jetzt viele Polyurethanformschaumkunden, beispielsweise im Schuhsohlen- oder Matratzenbereich, dass das verwendete Trennmittel frei ist von Zinnverbindungen.

Außerdem wird seitens des ECB (European Chemical Bureau) eine Gruppeneinstufung vorgenommen werden, die organische Zinnverbindungen als reproduktionstoxisch mit den R-Sätzen R60-R61 kennzeichnet. Einige Di-n-butylzinndicarboxylate, darunter DBTL, werden davon betroffen sein. Trennmittel, die solche Komponenten enthalten, sind dann praktisch nicht mehr einsetzbar.

Die DE 19 25 675 offenbart Trennmittel-Dispersionen für die Herstellung von Polyurethan-Formkörpern gemäß dem Oberbegriff des Anspruchs 1.

Eine Aufgabe der vorliegenden Erfindung war es daher, externe Formtrennmittel zu finden, die frei sind von zinnhaltigen Verbindungen, die aber trotzdem eine gute Trennwirkung zeigen und die Oberflächen der Polyurethan-Formkörper günstig beeinflussen, also feinporig, leicht offenporig und gleichmäßig und glatt hinterlassen.

Überraschenderweise wurde nun gefunden, dass eine Dispersion klassischer trennaktiver Substanzen wie Wachse, Seifen, Öle und/oder Silicone in organischen Lösungsmitteln zusammen mit Bismutsalzen organischer Säuren in Mengen von 0,05 bis 10 Gew.-%, bevorzugt 0,1 bis 5 Gew.-%, insbesondere 0,2 bis 1 Gew.-%, diese Aufgabe erfüllt.

Ein Gegenstand der Erfindung sind daher Trennmittel-Dispersionen für die Herstellung von Polyurethan-Formkörpern enthaltend im Wesentlichen:
A) mindestens ein trennaktives Mittel aus der Gruppe der Seifen, Öle, Wachse und Silicone und
B) mindestens ein Bismutcarboxylat und
C) organisches Lösungsmittel und gegebenenfalls
D) übliche Hilfs- und Zusatzstoffe,
wobei als Komponente B) mindestens ein Bi (III) - Salz organischer Säuren R-COOH ausgewählt aus Bismuttrioctoat und/oder Bismuttrineodecanoat eingesetzt wird.

Bevorzugt bestehen die Dispersionen aus:
A) 0,5 bis 40 Gew.-% mindestens eines trennaktiven Mittels aus der Gruppe Seifen, Öle, Wachse und Silicone,
B) 0,05 bis 10 Gew.-% mindestens eines der oben genannten Bismutcarboxylate,
C) 0,1 bis 10 Gew.-% Hilfs- und Zusatzmittel,
D) ad 100 Gew.-% organische Lösungsmittel.

Die Bismutcarboxylate sind aus Bi(III)-Verbindungen mit den organischen Säuren R-COOH nach den literaturbekannten Verfahren herstellbar oder als handelsübliche Produkte unter den jeweiligen Markennamen erhältlich, wie Bismuttrioctoat oder Bismuttrineodecanoat, beispielsweise unter den Markennamen Borchi® Kat (Fa. Borchers GmbH) oder Tegokat® (Fa. Goldschmidt TIB GmbH), Neobi® 200, Fa. Shepherd, Coscat®, Fa. Caschem. Diese Stoffe sind nicht als giftig und nicht als umweltgefährlich eingestuft.

Diese Salze katalysieren einmal die Reaktion der Polyole mit den Isocyanaten an den Grenzflächen der Reaktionsmischung/Formoberfläche und beeinflussen weiterhin die Oberfächenbeschaffenheit des Schaums in Richtung auf die erforderliche Zelligkeit und Struktur: Diese soll innerhalb einer gewissen Zellgröße liegen (feinzellig, aber kein Mikroschaum oder Grobschaum) und leicht offenporig sein(nicht geschlossen oder überwiegend offen). Diese Kriterien sind weitgehend praxisbezogen, d.h. durch einige orientierende Versuche optimierbar, und erleichtern die Beziehbarkeit des Formkörpers mit beispielsweise textilen Bezügen.

Ein weiterer Gegenstand der Erfindung ist die Verwendung dieser Dispersionen als externe Trennmittel bei der Herstellung von Polyurethan-Formkörpern.

Als klassische trennaktive Substanzen können erfindungsgemäß beispielsweise verwendet werden:
Wachse, d. h. flüssige, feste, natürliche oder synthetische Wachse, auch oxidiert und/oder teilverseift,
Ester von Carbonsäuren mit Alkoholen oder Fettalkoholen,
Metallseifen, wie Alkali- oder Erdalkalimetallsalze von Fettsäuren,
Öle, wie bei Raumtemperatur flüssige oder zähfließende Kohlenwasserstoffe, gegebenenfalls aber nicht bevorzugt, unter Mitverwendung ungesättigter,oligomere und/oder polymerer Kohlenwasserstoffe,
Silicone, wie Polydimethylsiloxane, gegebenenfalls substituiert mit aliphatischen oder aromatischen Kohlenwasserstoffresten.

Typische trennwirksame Wachse sind beispielsweise aufgeführt in den Firmenschriften "Waxes by Clariant, production, characteristics and applications" Clariant Mai 2003 und "Formtrennmittel mit Vestowax®" Degussa Februar 2001.

Als Lösungsmittel können bevorzugt Lösungsmittel eingesetzt werden, die frei von FCKW (Fluor-Chlor-Kohlenwasserstoffen) sind. Bevorzugt werden Kohlenwasserstoffe mit Siedebereichen von 25 bis 280 °C, bevorzugt 80 bis 200 °C, bevorzugt mit Flammpunkten > 22 °C, besonders bevorzugt > 55 °C, eingesetzt.

Beispiele für geeignete Lösungsmittel sind Spezialbenzin 100/140, Shellsol® D 40, Exxsol® D 40, Isoparaffine wie etwa Mischungen aus Isoundecan und Isododecan (Isopar® H) oder als Testbenzin (White Spirits) z.B. Kristallöl K 30.

Als übliche Hilfs- und Zusatzstoffe können ein oder mehrere der im Stand der Technik bekannten Verbindungen ausgesucht aus der Gruppe Polyurethanschaumstabilisatoren, z.B. Polysiloxan-Polyether-Copolymerisate, des weiteren Talkum, Verdickungsmittel, Kieselsäure, gegebenenfalls übliche Katalysatoren in den üblichen Mengen von ca. 0,1 bis 10 Gew.-%, eingesetzt werden.

Die erfindungsgemäßen Dispersionen können nach den im Stand der Technik bekannten Verfahren hergestellt werden. Bevorzugt geht man so vor, dass die trennaktiven Substanzen in geschmolzener Form vorgelegt werden, scherkraftreich ein Teil des Lösungsmittels eingetragen wird, dann das restliche Lösungsmittel zusammen mit den weiteren Komponenten scherkraftarm zugegeben wird.

Die Erfindung betrifft weiter die Verwendung der beschriebenen Trennmittel bei der Herstellung von Polyurethan-Formkörpern.

Klassischerweise wird die Form auf die gewünschte Formtemperatur von 40 bis 80 °C, bevorzugt 45 bis 75 °C, gebracht, mit Trennmittel eingesprüht, eine gewisse Zeit gewartet, bis die größte Menge Lösungsmittel verdampft ist, und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit wird die Form geöffnet und das Formteil entformt.

Die Erfindung betrifft weiter das Beziehen der mit Hilfe der beschriebenen Trennmittel hergestellten Polyurethan-Formkörper mit Stoffen, Textilien, Vliesen, Leder oder anderen Bezugsmaterialien etwa für Autositze, Polstermöbel oder Matratzen.

### Beispiele:

### Liste der eingesetzten Substanzen:

- Mikrowachs = handelsübliche Wachse mit einer Erstarrungstemperatur von 50 bis 90 °C,
- Polyethylenwachs = handelsübliche Wachse mit einer Erstarrungstemperatur von 50 bis 90 °C,
- Kohlenwasserstoff Lösungsmittel = handelsübliche Benzinfraktionen mit Siedebereichen von 80 bis 200 °C,
- Tegokat® Bismut(III)neodecanoat, Hersteller: Goldschmidt TIB GmbH
- Borchi® Kat Bismut(III)octoat, Hersteller: Borchers GmbH
- Kosmos® 19 = Dibutylzinndilaurat (DBTL), Hersteller: Degussa
- DC® 190 = Polyethersiloxan, Hersteller: Air Products,
- Desmophen® PU 21IK01 = Polyetherpolyol, Hersteller: Bayer,
- Tegoamin® TA 33, Hersteller: Degussa,
- Tegoamin^{®} AS-1, Hersteller: Degussa,
- Tegostab® EP-K-38 = organomodifiziertes Siloxan, Hersteller: Degussa,
- Suprasec® 2412 = Diphenylmethan-4,4'-diisocyanat, Hersteller: Huntsman.

### Beispiel 1:

### Trennmittel mit Bismutneodecanoat

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 56 °C) versetzt. 48,5 Gew.-% Kohlenwasserstoff (Flammpunkt 56 °C) werden mit 0,5 Gew.-% Tegokat® Bismutneodecanoat und 1 Gew.-% Polyethersiloxan DC 190 versetzt und zu der Wachsdispersion zugegeben.

### Beispiel 2:

### Trennmittel mit Bismutoctoat

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 56 °C) versetzt. 48,5 Gew.-% Kohlenwasserstoff (Flammpunkt 56 °C) werden mit 0,5 Gew.-% Borchi® Kat Bismutoctoat und 1 Gew.-% DC® 190 versetzt und zu der Wachsdispersion zugegeben.

### Vergleichsbeispiel A:

### Trennmittel ohne Katalysator

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 56 °C) versetzt. 49 Gew.-% Kohlenwasserstoff (Flammpunkt 56 °C) werden mit 1 Gew.-% DC® 190 versetzt und zu der Wachsdispersion zugegeben.

### Vergleichsbeispiel B:

### Trennmittel mit Dibutylzinndilaurat

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 56 °C) versetzt. 48,5 Gew.-% Kohlenwasserstoff (Flammpunkt 56 °C) werden mit 0,5 Gew.-% Kosmos® 19 und 1 Gew.-% DC^{®} 190 versetzt und zu der Wachsdispersion zugegeben.

### Trennmittelversuche:

Die Trennmittel wurden mittels einer 0,5 mm Düse in praxisnahen Mengen von 20 g/m² auf Testmetallplatten aufgesprüht und ein schäumbares Polyurethansystem, bestehend aus 100 Teilen Desmophen® PU 21IK01, 3,5 Teilen Wasser, 0,4 Teilen Tegoamin® TA 33, 0,25 Teilen Tegoamin® AS-1, 0,7 Teilen Diethanolamin, 0,5 Teilen Tegostab® EP-K-38, 0,2 Teilen Essigsäure (60 % in Wasser), 63,5 Teilen Suprasec® 2412, auf diese Platten in einer Kastenform bei 55 °C aufgeschäumt.

Nach dem Aushärten (10 Minuten) wurden die Metallplatten unter Verwendung eines Federkraftmessers vom Schaum abgezogen, um ein Maß für die Trennwirkung zu messen.

### Bewertung der Trennversuche:

| Trennmittel | Kraft zum Abziehen der Metallplatte vom Schaum [kg] | Beurteilung der Schaumoberfläche |
|---|---|---|
| 1 | 1,0 | leicht offenporig, gut beziehbar |
| 2 | 1,1 | leicht offenporig, gut beziehbar |
| A | 1,5 | weitgehend geschlossen, schlecht beziehbar, da zu hohe Reibungskräfte an der geschlossenen und damit größeren Oberfläche |
| B | 1,0 | leicht offenporig, gut beziehbar |

Wie aus obiger Tabelle ersichtlich, zeigen die erfindungsgemäß verwendeten ungiftigen Bismutsalze in den Trennmitteln 1 und 2 deutliche technische Vorteile gegenüber dem Blindwert ohne Katalysator (Trennmittel A) und sind technisch gleichwirkend mit den giftigen Zinnverbindungen (Trennmittel B).

## Patentansprüche

1. Trennmittel-Dispersionen für die Herstellung von Polyurethan-Formkörpern enthaltend im Wesentlichen
A) mindestens ein trennaktives Mittel aus der Gruppe der Seifen, Öle, Wachse und Silicone und
B) mindestens ein Bismutcarboxylat und
C) organisches Lösungsmittel und gegebenenfalls
D) übliche Hilfs- und Zusatzstoffe,
**dadurch gekennzeichnet, dass** als Komponente B) mindestens ein Bi(III)-Salz organischer Säuren R-COOH ausgewählt aus Bismuttrioctoat und/oder Bismuttrineodecanoat eingesetzt wird.

2. Dispersionen nach Anspruch 1, enthaltend im Wesentlichen
A) 0,5 bis 40 Gew.-% mindestens eines trennaktiven Mittels aus der Gruppe Seifen, Öle, Wachse und Silicone und
B) 0,05 bis 10 Gew.-% Bismutcarboxylat und gegebenenfalls
C) 0,1 bis 10 Gew.-% Hilfs- und Zusatzmittel und
D) ad 100 Gew.-% Lösungsmittel.

3. Verwendung der Trennmittel-Dispersionen gemäß den Ansprüchen 1 oder 2 zur Herstellung von Polyurethan-Formkörpern.

4. Verwendung der Trennmittel-Dispersionen gemäß den Ansprüchen 1 oder 2 zur Verbesserung der Beziehbarkeit von damit hergestellten Polyurethan-Formkörpern.

## Claims

1. Release agent dispersions for producing polyurethane moldings, substantially comprising
A) at least one agent having release activity, from the group consisting of soaps, oils, waxes and silicones, and
B) at least one bismuth carboxylate, and
C) organic solvent, and, if desired,
D) typical auxiliaries and additives,
**characterized in that** use is made as component B) of at least one Bi(III) salt of organic acids R-COOH selected from bismuth trioctoate and/or bismuth trineodecanoate.

2. Dispersions according to Claim 1, substantially comprising
A) 0.5% to 40% by weight of at least one agent having release activity, from the group consisting of soaps, oils, waxes, and silicones, and
B) 0.05% to 10% by weight of bismuth carboxylate, and, if desired,
C) 0.1% to 10% by weight of auxiliaries and adjuvants, and
D) solvent to 100% by weight.

3. Use of the release agent dispersions according to Claims 1 or 2 for producing polyurethane moldings.

4. Use of the release agent dispersions according to Claims 1 or 2 for improving the coverability of polyurethane moldings produced using it.

## Revendications

1. Dispersions d'agent de démoulage pour la réalisation de corps façonnés en polyuréthane, contenant essentiellement
A) au moins un agent actif en démoulage, du groupe formé par les savons, les huiles, les cires et les silicones et
B) au moins un carboxylate de bismuth, et
C) un solvant organique et éventuellement
D) des auxiliaires et des additives habituels,
**caractérisées en ce que** l'on utilise, en tant que composant B), un sel de Bi(III) d'acides organiques R-COOH choisi parmi le trioctoate de bismuth et le tridécanoate de bismuth.

2. Dispersions selon la revendication 1, contenant essentiellement
A) 0,5 à 40% en poids d'au moins un agent actif en démoulage du groupe formé par les savons, les huiles, les cires et les silicones et
B) 0,05 à 10% en poids de carboxylate de bismuth et éventuellement
C) 0,1 à 10% en poids d'adjuvants et d'additifs et
D) ad 100% en poids de solvant.

3. Utilisation des dispersions d'agent de démoulage selon les revendications 1 ou 2 pour la réalisation de corps façonnés en polyuréthane.

4. Utilisation des dispersions d'agent de démoulage selon les revendications 1 ou 2 pour améliorer l'aptitude au garnissage des corps façonnés en polyuréthane réalisés avec celles-ci.
